# EUROPEAN PATENT APPLICATION

(11) **EP 4 704 407 A1**
(43) Date of publication of application: **04.03.2026**
(21) Application number: 25198084.3
(22) Date of filing: 26.08.2025
(51) Int. Cl.: H04L 61/5038

(54) **ASSIGNING ADDRESSES TO DEVICES ON A NETWORK**

(30) Priority: 26.08.2024 US 202418815065
(71) Applicant: Schneider Electric IT Corporation, Foxboro, MA 02035 (US)
(72) Inventor: HAFFNER, Joshua Thomas, Foxboro, 02035 (US); ROHR, Daniel J., Foxboro, 02035 (US)
(74) Representative: Plasseraud IP

(57) **Abstract**

A method of assigning addresses to devices on a network is presented. The method includes causing a master control unit to assert a first address signal on a first address line; causing a first device to transmit a first response to the master control unit via at least one data bus responsive to asserting the first address signal on the first address line; causing the master control unit to transmit a first network address via the at least one data bus to the first device responsive to receiving the first response; causing the master control unit and first device to complete a first communication test responsive to transmitting the first network address; and causing the master control unit to cease asserting the first address signal responsive to completing the first communication test.

## Description

### BACKGROUND

### 1. Field of the Disclosure

At least one example in accordance with the present disclosure relates generally to address arbitration with communication networks.

### 2. Discussion of Related Art

Some communication networks can support multiple networked devices. In some communication networks, each unique device may require a unique network address. The unique network addresses may act as a unique identifiers for devices so that messages can be addressed to specific devices.

### SUMMARY

Methods, systems and computer-readable media are provided according to the appended claims.

### BRIEF DESCRIPTION OF THE DRAWINGS

Various aspects of at least one embodiment are discussed below with reference to the accompanying figures, which are not intended to be drawn to scale. The figures are included to provide an illustration and a further understanding of the various aspects and embodiments, and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or nearly identical component that is illustrated in various figures is represented by a like numeral. For purposes of clarity, not every component may be labeled in every figure. In the figures:
FIG. 1 illustrates a network according to an example;
FIG. 2 illustrates a process for assigning network addresses according to an example;
FIG. 3 illustrates a process for assigning network addresses according to an example; and
FIG. 4 illustrates a process for assigning network addresses according to an example

### DETAILED DESCRIPTION

For some communication networks, including those with devices linked in a daisy-chain fashion, providing network addresses for the devices on the network may be difficult. For example, each device may have, or require activation of, a physical component, such as a resistor array or dipswitch array, that would be set manually by the user to correspond to a unique network address. This would require users to manually set the network addresses for each device, which is time consuming, inefficient, and error prone. Furthermore, it can be costly, as it may require users or manufacturers to create unique part numbers for the particular network addresses (which may include the corresponding physical components), and to maintain those part numbers and/or corresponding parts in inventory.

Aspects and elements disclosed herein relate to systems and methods for arbitrating network addresses for devices that do not require unique part numbers or parts. The systems and techniques described herein may be used on most communication networks, including those using the CAN (Controller Area Network) protocol, the RS485 protocol, and/or other, similar protocols. Methods hereby described may provide for a dynamic CAN addressing. The wording "arbitrating" may be understood in some examples hereby described as referring to a process comprising asserting an address signal to a device, receiving a response from the device, transmitting a network address to the device, performing a communication test, and ceasing the address signal, as described in detail herein.

**In** some examples, a master control unit may be coupled to a first device via an address line. The master control unit may also be coupled to the first device and a plurality of other devices by one or more communication busses (e.g., a differential communication bus). For the purposes of this application, the terms "client device" or "client" may refer to a device that is not the master control unit. For example, the first device may be a client device, as may the devices of the plurality of other devices. Furthermore, the term "data bus" shall refer to busses that are not the address line, including communication busses and/or data busses.

The master control unit may assert an address signal on the address line. The first device may receive the address signal and then monitor the communication bus for a signal containing a unique network address identification value ("network address") for the first device. Once the first device receives the network address, the first device may transmit a confirmation signal to the master control unit indicating that the first device now "owns" (i.e., is using) the specific network address. Then the master control unit may disengage the address signal. Once the address signal is disengaged, the first device may assert a new address signal on a different address line (or a different section of the address line) to the next device in the chain, for example, to a second device.

The second device may then monitor the communication bus for a network address signal from the master control unit. The master control unit may provide a new network address for the second device. Once the second device receives the new network address, the second device may send a confirmation signal to the master control unit and the first device may disengage the new address signal. In some examples, the new address signal may be disengaged responsive to a command from the master control unit. The second device may then assert its own new address signal to a third device, and the process described above may repeat for every device linked on the network.

In some examples, once the final device on the network has received a network address from the master control unit, the final device may engage a termination resistance.

New devices may be added to the network either to the end of the network or in the middle of the network. Furthermore, in some examples, the master control unit and a given device may negotiate the network address for that particular client device. For example, the network address initially offered by the master control unit may be inappropriate, and the client device and master control unit may negotiate a more appropriate network address.

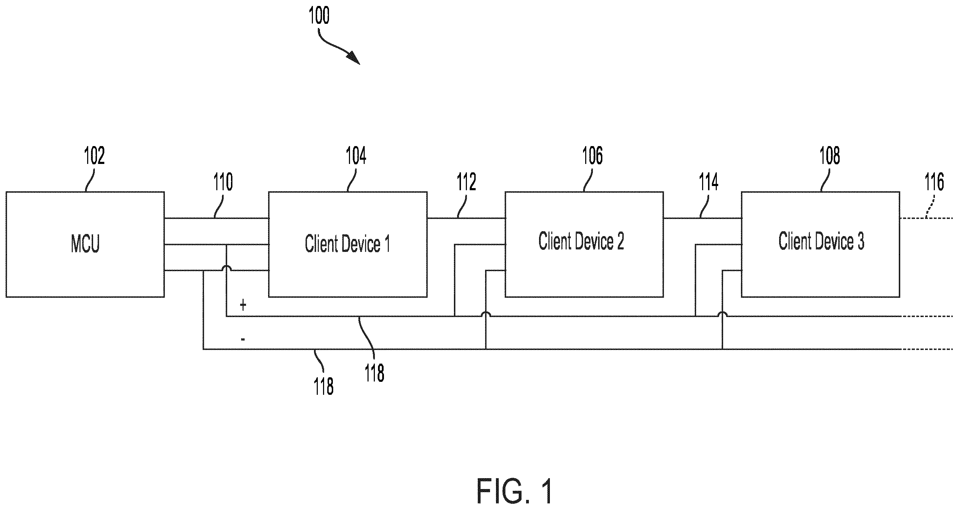

FIG. 1 illustrates a network 100 suitable for network communication according to an example. The network 100 includes a master control unit 102 ("master control unit 102"), a plurality of client devices, a first address line 110, a second address line 112, a third address line 114, an optional fourth address line 116, and a differential data bus 118. The plurality of client devices includes a first client device 104 ("first device 104"), a second client device 106 ("second device 106"), and a third client device 108 ("third device 108").

The network 100 may assign network addresses to each client device such that the master control unit 102 can address any transmission to a particular or specific client device. This may be done without manual intervention, the setting of resistors and/or relays, and so forth.

The master control unit 102 has a first connection coupled to the first address line 110, and a second connection coupled to the differential data bus 118. The first address line 110 is further coupled to a first connection of the first device 104. The second address line 112 is coupled between a fourth connection of the first device 110 and a first connection of the second device 106. The third address line 114 is coupled between a fourth connection of the second device 106 and a first connection of the third device 108. The third device 108 may, optionally, be coupled via a respective fourth connection to the optional fourth address line 116, which may be coupled to a first connection of another client device. The differential data bus 118 is coupled to a respective one or more second connection of each client device, including the first device 104, the second device 106, and the third device 108.

In general, each client device is coupled to at least one address line, and may be coupled to two or more address lines. The client devices may be coupled to one another via their address line connections in a linear daisy chain topology.

In one example of operation, when the network 100 becomes active (e.g., turns on, receives power, and so forth) the master control unit 102 may assert an address signal on the first address line 110, and the first device 104 may receive that address signal via the first address line 110. The first device 104 may then enter arbitration mode and may use a default address value. The first device 104 may provide that default address value to the master control unit 102 via the differential data bus 118. The master control unit 102 may then assign a network address to the first device 104. Once the first device 104 receives the assigned network address, the first device 104 and master control unit 102 may send communication test signals to one another via the differential data bus 118 to confirm that the first device 104 has the correct address.

Once the address is confirmed and communication is established, the master control unit 102 may cease asserting the address signal on the first address line 110 and the first device 104 may assert an address signal on the second address line 112. The address signal on the second address line 112 may be received by the second device 106, and the second device 106 may then enter arbitration mode and may use a default address value. The second device 106 may provide the default address value to the master control unit 102 via the differential data bus 118. The master control unit 102 may then assign a network address to the second device 106. Once the second device 106 receives the assigned network address, the second device 104 and the master control unit 102 may send communication test signals to one another via the differential data bus 118 to confirm that the second device 106 has the correct address.

Once the address is confirmed and communication is established, the first device 104 may cease asserting the address signal on the second address line 112, and the second device 106 may assert an address signal on the third address line 114. The address signal on the third address line 114 may be received by the third device 108, and the third device 108 may then enter arbitration mode and may use a default address value. The third device 108 may provide the default address value to the master control unit 102 via the differential data bus 118. The master control unit 102 may then assign a network address to the third device 108. Once the third device 108 receives the assigned network address, the third device 108 and the master control unit 102 may send communication test signals to one another via the differential data bus 118 to confirm that the third device 108 has the correct address.

Once the address is confirmed and communication is established, the second device 106 may cease asserting the address signal on the third address line 114. The third device 108 may then assert an address signal on the fourth address line 116, and the process may continue as described above for any number of client devices.

In some examples, the master control unit 102 may send instructions to the client devices indicating when the client device is to provide an address signal on a respective address line, and when to cease providing an address signal on a respective address line. The master control unit 102 may generally communicate with the client devices as part of the process of asserting and ceasing address signals. In general, communication with the client devices in this regard are carried out using the differential data bus 118 or an equivalent communication line.

The process of assigning addresses described above allows any number of client devices to receive a unique network address without manual intervention by a user. The process may begin when the system starts, or may be initiated at any time the system is active.

In some examples, each client device may include a terminating resistor. For examples, the first device 104, second device 106, and/or third device 108 may each include a respective terminating resistor. When the respective client device is determined to be the last client device in the daisy chain, that client device may connect its terminating resistor to act as a terminating resistor for the daisy chain.

Additional client devices may be added to the network 100. For example, a new client device may be added to the end of the daisy chain. The next-to-last client device may periodically assert an address signal on the address line connecting that next-to-last client device to the new client device. If the new client device is present, the new client device may enter arbitration mode and send a signal to the master control unit 102. The master control unit 102 may then assign an address to the new client device in a manner identical or substantially identical to that described above.

Likewise, in some examples, a new client device may be added in the middle of the daisy chain between two preexisting client devices. This new client device may be detected in a number of ways. The preexisting client devices may periodically assert address signals (e.g., to check whether a new device has been added to the network 100) in a manner similar or identical to adding a device to the end of the daisy chain as described above, and/or the master control unit 102 may periodically repeat the entire process of addressing the devices, starting with the first device 104 and working through to the last device.

Differential communication busses are not required for the network 100: any type of bus capable of sending and receiving communications may be used.

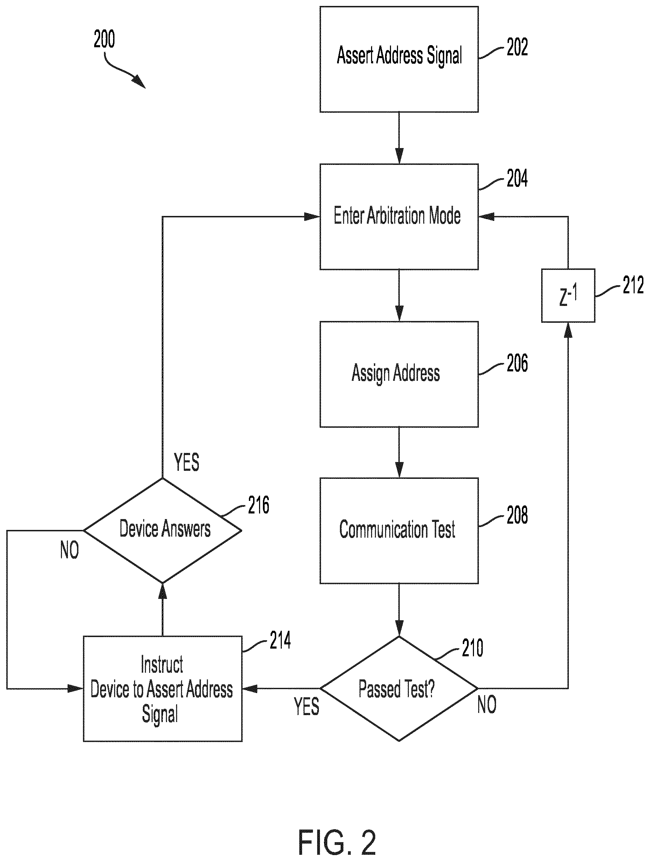

FIG. 2 illustrate a process 200 for assigning network addresses according to an example. For the purposes of explanation, the following discussion of FIG. 2 will refer back to the elements of FIG. 1. However, the process 200 does not require the elements of FIG. 1, and may be performed using other devices.

At act 202, the master control unit 102 asserts an address signal along the first address line **110** to the first device 104. When the first device 104 receives the address signal, the first device 104 may transmit a signal on a data bus, such as the differential data bus 118, containing a default network address of the first device 104. The master control unit 102 may receive the signal from the first device 104. The process 200 may then continue to act 204.

At act 204, the master control unit 102 and the first device 104 enter into arbitration mode. During arbitration mode, the master control unit 102 and the first device 104 can transmit data to one another via the differential data bus 118. These transmissions can facilitate a determination, by the master control unit 102, of an appropriate network address to assign to the first device 104. The process 200 may then continue to act 206.

At act 206, the master control unit 102 transmits, via the differential data bus 118, a signal instructing the first device 104 to set the first device's 104 network address to be the network address determined by the master control unit 102 (e.g., a first network address). For example, the master control unit 102 can instruct the first device 104 to switch from using the default network address of the first device 104 to using the first network address determined by the master control unit 102. The first device 104 can then switch its network address to be the network address determined by the master control unit 102. The process 200 may then continue to act 208.

At act 208, the master control unit 102 and the first device 104 engage in a communication test. The communication test may include the master control unit 102 sending a first transmission (i.e., a test signal) intended for the first device 104, and the first device sending a response (for example, a response signal) indicating successful receipt of the first transmission. In some examples, the communication test includes the master control unit 102 transmitting at least one signal on the differential data bus 118 wherein the signal is addressed using the first network address. That is, the signal can contain an indication, for example, a header section that includes the first network address, which indicates that the signal is intended for the device (and/or devices) that are using the first network address as their own network address. If the first device 104 has successfully adopted the first network address, the first device 104 may recognize the transmission as intended for it. The first device 104 then sends a response to the master control unit 102 indicating that the signal addressed with the first network address was successfully received. The process 200 may then continue to act 210.

At act 210, the master control unit 102 determines if the communication test was successful or not. For example, the master control unit 102 may determine that the communication test was successful if the response from the first device 104 confirms receipt of the test signal. The master control unit 102 may determine that the communication test was not successful if no response is received from the first device 104. If the master control unit 102 determines that the communication test was successful (210 YES), the process may continue to act 214. If the master control unit 102 determines that the communication test was not successful (210 NO), the process may continue to act 212.

At act 212, there is a delay. The delay may be any amount of time (for example, 500ms, 1 second, and so forth). In some examples, the delay provides an opportunity for the system to be checked for errors, for the system to receive maintenance, for elements in the system to power cycle, and so forth. The process 200 may then return to act 204, where the master control unit 102 and the relevant device (for example, the first device 104) again enter arbitration.

Returning to act 210 (YES), when the test is successful the process may continue to act 214. At act 214, the master control unit 102 ceases asserting an address signal and instructs the first device 104 to assert an address signal on the second address line 112. The process 200 may then continue to act 216.

At act 216, the master control unit 102 determines if the next device (e.g., the second device 106) is providing a signal on the differential data bus 118 containing a default network address of the second device. If the master control unit 102 receives a default network address for the second device 106 (216 YES), the process 200 may return to act 204 where the master control unit 102 and second device 106 then enter arbitration. That is, acts 204 through 216 may be repeated with respect to the second device 106 instead of the first device 104, and/or with respect to the third device 108 instead of the second device 106. In contrast, if the next device (e.g., the second device 106) does not answer (for example, does not provide a signal on the differential data bus 118 containing a default network address) (216 NO), the process 200 may return to act 214 and the master control unit 102 may repeat the instruction to the first device 104 to assert an address signal on the second address line 112.

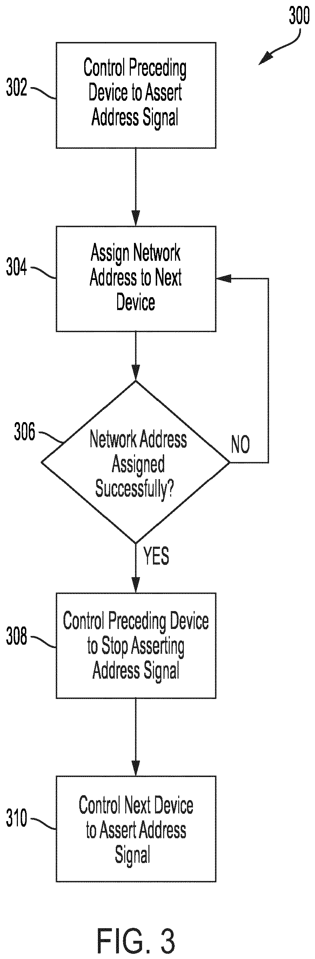

FIG. 3 illustrates a process 300 for assigning network addresses to devices in a daisy chain configuration according to an example. For the purpose of explanation, reference will be made to the elements of claim 1.

At act 302, a control unit (such as the master control unit 102 of FIG. 1) instructs a first device (such as the first device 104, second device 106, or third device 108 of FIG. 1) to assert an address signal on an address line. The first device may be coupled via the address line to a next device in the daisy chain. In some examples, the first device is the control unit, though in other examples the first device is a different device. The instruction is sent by the control unit via a data bus or other non-address-line connection between the control unit and the device. The process 300 may then continue to act 302.

At act 302, the control unit assigns a network address to the next device in the daisy chain. For example, the first device may already have been assigned a network address. Thus, the control unit then assigns the network address to the next device. The control unit may assign the network address via a data bus or similar, non-address-line, connection. In some examples, the control unit receives a default network address of the network address from the next device following the first device asserting the address signal on the address line. The process 300 may then continue to act 306.

At act 306, the control unit determines whether the network device was successfully assigned to the next device. For example, the control unit may use a communication test to determine that the network address was successfully assigned. If the control unit determines the network address was not successfully assigned (306 NO), the process 300 may return to act 304 to attempt to assign the network address again. If the control unit determines the network address was successfully assigned (306 YES), the process 300 may continue to act 308.

At act 308, the control unit controls the first device to cease asserting the address signal on the address line. In some examples, the instruction to cease asserting the address signal is transmitted via a data bus and may be addressed using a network address of the first device. The process 300 may then continue to act 310.

At act 310, the control unit controls the next device to begin asserting an address signal on a respective address line. In some example, the instruction to begin asserting the address signal is transmitted via a data bus and may be addressed using the network address assigned to the next device at act 304. Responsive to receiving the instruction, the next device may begin asserting an address signal on its respective address line.

In some examples, after act 310, acts 304 through 310 may be repeated any number of times, such that the next device is now the first device, and a new device in the daisy chain is now the next device. For example, the process may be repeated for *n* devices, where *n* is an arbitrary number, such that for every *n* device, the process 300 is repeated for device *n* and device *n+*1 in the daisy chain.

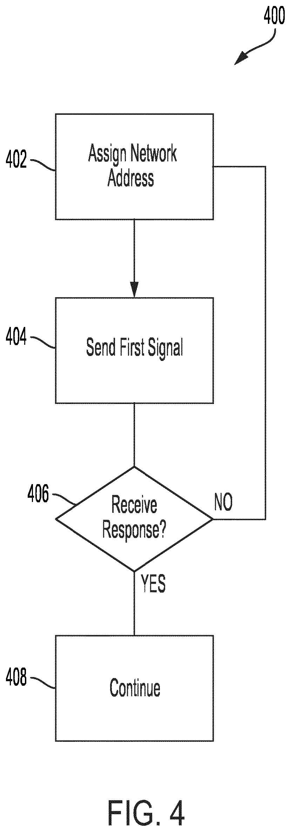

FIG. 4 illustrates a process 400 for a communication test according to an example.

At act 402, a control unit, such as the master control unit 102 of FIG. 1, assigns a network address to a device. The master control unit 102 can assign the network address by, for example, transmitting a signal addressed using a default network address to the device, the signal containing a new network address for the device and instructing the device to change its network address from the default network address to the new network address. The process 400 may then continue to act 404.

Following act 402, the control unit may not have direct access to the device and thus may not be able to directly verify that the device adopted the new network address. Therefore, at act 404, the control unit may transmit a first test signal. In some examples, the first test signal is addressed using the new network address and contains instructions for the device to confirm receipt of the first test signal. Because the first test signal is addressed using the new network address, the first test signal should only be received and processed by a device that is using the new network address. Therefore, a response signal to the first test signal should only be sent if a device on the network is using the new network address. The process 400 may then continue to act 406.

At act 406, the control unit determines whether a response signal has been received. If a response signal was not received (406 NO), this may indicate that the device did not receive the signal indicating it to use the new network address, or for some other reason may not have adopted the new network address. In such as case (406 NO), the process 400 may return to act 402 to attempt to assign the new network address to the device. If a response signal was received (406 YES), this may indicate that the device received the test signal and is using the new network address. In some examples, the response signal explicitly contains an indication of the original network address of the device, the new network address of the device, and any other information that may be useful to verify that the correct device has adopted the correct network address. If a response was received (406 YES), the process 400 may continue to act 408.

At act 408, the control unit continues to a next device, assigns that device a network address, repeats the communication test, and so forth. Alternatively, if all devices have been assigned a network address, the control unit and/or devices may take other actions.

In some examples, a client device will only attempt to drive the data bus (e.g., the differential data bus 118) provided that client device has received an address signal or has established a network address (e.g., by being assigned a network address by another device, such as the master control unit 102).

In some examples, the last client device in the chain may periodically assert an address signal on a corresponding address line. However, in some examples, a response signal may never be generated due to no additional device being coupled to the address line on which the last client device is periodically asserting the address signal.

Examples of the methods and systems discussed herein are not limited in application to the details of construction and the arrangement of components set forth in the description or illustrated in the accompanying drawings. The methods and systems are capable of implementation in other embodiments and of being practiced or of being carried out in various ways. Examples of specific implementations are provided herein for illustrative purposes only and are not intended to be limiting. In particular, acts, components, elements and features discussed in connection with any one or more examples are not intended to be excluded from a similar role in any other examples.

Also, the phraseology and terminology used herein is for the purpose of description and should not be regarded as limiting. Any references to examples, embodiments, components, elements or acts of the systems and methods herein referred to in the singular may also embrace embodiments including a plurality, and any references in plural to any embodiment, component, element or act herein may also embrace embodiments including only a singularity. References in the singular or plural form are not intended to limit the presently disclosed systems or methods, their components, acts, or elements. The use herein of "including," "comprising," "having," "containing," "involving," and variations thereof is meant to encompass the items listed thereafter and equivalents thereof as well as additional items.

References to "or" may be construed as inclusive so that any terms described using "or" may indicate any of a single, more than one, and all of the described terms. In addition, in the event of inconsistent usages of terms between this document and documents incorporated herein by reference, the term usage in the incorporated features is supplementary to that of this document; for irreconcilable differences, the term usage in this document controls.

Various controllers, such as the master control unit 102, may execute various operations discussed above. Using data stored in associated memory and/or storage, the master control unit 102 also executes one or more instructions stored on one or more non-transitory computer-readable media, which the master control unit 102 may include and/or be coupled to, that may result in manipulated data. In some examples, the master control unit 102 may include one or more processors or other types of controllers. In one example, the master control unit 102 is or includes at least one processor. In another example, the master control unit 102 performs at least a portion of the operations discussed above using an application-specific integrated circuit tailored to perform particular operations in addition to, or in lieu of, a general-purpose processor.

Additional numbered examples are provided below:
Example 1. A method of assigning addresses to devices on a network, comprising:
   causing a master control unit to assert a first address signal on a first address line;
   causing a first device to transmit a first response to the master control unit via at least one data bus responsive to asserting the first address signal on the first address line;
   causing the master control unit to transmit a first network address via the at least one data bus to the first device responsive to receiving the first response;
   causing the master control unit and first device to complete a first communication test responsive to transmitting the first network address; and
   causing the master control unit to cease asserting the first address signal responsive to completing the first communication test.
Example 2. The method of example 1 further comprising:
   causing the first device to assert a second address signal on a second address line;
   causing a second device to transmit a second response to the master control unit via the at least one data bus responsive to asserting the second address signal on the second address line;
   causing the master control unit to transmit a second network address via the at least one data bus to the second device responsive to receiving the second response;
   causing the master control unit and the second device to complete a second communication test responsive to transmitting the second network address; and
   causing the first device to cease asserting the second address signal responsive to completing the second communication test.
Example 3. The method of example 2 wherein:
   the first communication test further includes:
   causing the master control unit to transmit one or more first test signals addressed using the first network address on the at least one data bus, and
   responsive to transmitting the one or more first test signals, causing the first device to transmit one or more first confirmation signals on the at least one data bus; and
   the second communication test further includes:
      causing the master control unit to transmit one or more second test signals addressed using the second network address on the at least one data bus, and
      responsive to transmitting the one or more second test signals addressed using the second network address, causing the second device to transmit one or more second confirmation signals on the at least one data bus.
Example 4. The method of example 1 further comprising:
   causing a preceding device of a plurality of sequential devices to assert a respective address signal on a respective address line, the respective address line being coupled to a next device of the plurality of sequential devices;
   causing the next device to transmit a respective response signal via the at least one data bus responsive to the preceding device asserting the respective address signal;
   causing the master control unit to transmit a respective network address via the at least one data bus to the next device responsive to the next device transmitting the respective response signal;
   causing the master control unit and the next device to complete a respective communication test responsive to transmitting the respective network address;
   causing the preceding device to cease asserting the respective address signal on the respective address line responsive to completing the communication test; and
   recursively repeating the foregoing acts wherein the next device is now the preceding device until each device of the plurality of sequential devices has asserted at least one corresponding respective address signal on a corresponding respective address line.
Example 5. The method of example 4 wherein at least one device of the plurality of sequential devices periodically asserts a respective address signal on a respective address line, wherein the respective address signal is configured to detect a presence of a new device of the plurality of sequential devices.
Example 6. A system for addressing devices on a network, comprising:
   a master control unit configured to be coupled to a plurality of devices including a first device;
   a first address line configured to be coupled between the master control unit and the first device; and
   at least one data bus configured to be coupled to the master control unit and to each device of the plurality of devices;
   the master control unit being configured to
   assert a first address signal on the first address line,
   receive a first response signal from the first device responsive to asserting the first address signal,
   transmit a first network address on the at least one data bus responsive to receiving the first response signal,
   receive a second response signal from the first device responsive to transmitting the first network address, and
   cease asserting the first address signal responsive to receiving the second response signal.
Example 7. The system of example 6 further comprising the first device, wherein the first device is configured to
   receive the first address signal,
   transmit the first response signal responsive to receiving the first address signal,
   receive the first network address responsive to transmitting the first response signal,
   set a network address of the first device to be the first network address responsive to receiving the first network address,
   receive at least one test signal addressed using the first network address responsive to setting the network address of the first device to be the first network address, and
   transmit the second response signal responsive to receiving the at least one test signal addressed using the first network address, wherein the first response signal, second response signal, and the at least one test signal addressed using the first network address are transmitted via the at least one data bus.
Example 8. The system of example 7 further comprising a second address line configured to be coupled to the first device, wherein the master control unit is further configured to transmit a first control signal to the first device responsive to receiving the second response signal, wherein the first control signal instructs the first device to assert a second address signal on the second address line.
Example 9. The system of example 8 further comprising a second device of the plurality of devices, wherein the second address line is further configured to be coupled to the second device, wherein the second device is configured to
   transmit a third response signal on the at least one data bus responsive to receiving the second address signal,
   receive a second network address responsive to transmitting the third response signal,
   set a network address of the second device to be the second network address responsive to receiving the second network address,
   receive at least one test signal addressed using the second network address, and
   transmit a fourth response signal on the at least one data bus responsive to receiving the at least one test signal addressed using the second network address.
Example 10. The system of example 9 wherein
   the master control unit is further configured to
   transmit the second network address responsive to receiving the third response signal,
   transmit the at least one test signal addressed using the second network address,
   transmit a second control signal addressed using the first network address responsive to receiving the fourth response signal, wherein the second control signal contains instructions instructing a device having the first network address to cease asserting the second address signal, and
   transmit a third control signal addressed using the second network address responsive to transmitting the second control signal, wherein the third control signal contains instructions instructing a device having the second network address to assert a third address signal; and
   the second device is further configured to assert a third address signal on a third address line responsive to receiving the third control signal.
Example 11. The system of example 6 wherein each device of the plurality of devices includes a terminating resistor, and a last device of the plurality of devices is configured to connect a terminating resistor of the last device responsive to asserting an address signal and no response signal being transmitted responsive to asserting the address signal.
Example 12. The system of example 6 wherein the master control unit is further configured to transmit at least one signal addressed using a network address instructing at least one device of the plurality of devices to periodically assert a respective address signal on a respective address line.
Example 13. At least one non-transitory computer-readable medium containing thereon computer executable instructions for assigning network addresses to devices on a network, the instructions instructing at least one controller to perform a method, the method comprising:
   arbitrating a first network address for a first device by
   asserting a first address signal on a first address line,
   receiving a response from the first device on at least one data bus responsive to asserting the first address signal,
   transmitting the first network address via the at least one data bus to the first device responsive to receiving the response from the first device,
   completing a first communication test responsive to transmitting the first network address, and
   ceasing to assert the first address signal.
Example 14. The at least one non-transitory computer-readable medium of example 13 wherein the instructions instruct the at least one processor to arbitrate a second network address for a second device by:
   receiving a response from the second device on the at least one data bus;
   transmitting a second network address via the at least one data bus to the second device responsive to receiving the response from the second device; and
   completing a second communication test responsive to transmitting the second network address.
Example 15. The at least one non-transitory computer-readable medium of example 13 wherein the instructions further instruct the at least one controller to:
   send a first control signal on the at least one data bus, the first control signal being addressed using the first network address, responsive to completing the first communication test, the first control signal instructing the first device to assert a second address signal on a second address line;
   send a second control signal on the at least one data bus, the second control signal being addressed using the first network address, responsive to completing the second communication test, the second control signal instructing the first device to cease asserting the second address signal; and
   send a third control signal on the at least one data bus, the third control signal being addressed using the second network address, responsive to completing the second communication test, the third control signal instructing a second device to assert a third address signal on a third address line.
Example 16. The at least one non-transitory computer-readable medium of example 13 wherein the instructions further instruct the at least one controller to arbitrate a third network address for a third device by:
   receiving a response from the third device on the at least one data bus;
   transmitting a third network address via the at least one data bus to the third device responsive to receiving the responsive from the third device; and
   completing a third communication test responsive to transmitting the third network address.
Example 17. The at least one non-transitory computer-readable medium of example 16 wherein completing the third communication test includes:
   transmitting one or more test signals address using the third network address on the at least one data bus responsive to transmitting the third network address; and
   receiving one or more third test confirmation signals on the at least one data bus responsive to transmitting the one or more test signals addressed using the third network address.
Example 18. The at least one non-transitory computer-readable medium of example 13 wherein the first communication test includes the at least one controller:
   transmitting one or more test signals addressed using the first network address on the at least one data bus responsive to transmitting the first network address; and
   receiving one or more first test confirmation signals on the at least one data bus responsive to transmitting the one or more test signals addressed using the first network address.
Example 19. The at least one non-transitory computer-readable medium of example 13 wherein the second communication test includes the at least one controller:
   transmitting one or more test signals addressed using the second network address on the at least one data bus responsive to transmitting the second network address; and
   receiving one or more second test confirmation signals on the at least one data bus responsive to transmitting the one or more test signals addressed using the second network address.
Example 20. The at least one non-transitory computer-readable medium of example 13 where the response from the first device includes a preexisting network address of the first device, and the at least one controller is further instructed by the instructions to receive a response from a second device via the at least one data bus, wherein the response from the second device includes a preexisting network address of the second device.
Example 21. The at least one non-transitory computer-readable medium of example 20 wherein a preexisting network address is a default network address.

As illustrated by these examples, examples in accordance with the present disclosure may perform the operations described herein using many specific combinations of hardware and software and the disclosure is not limited to any particular combination of hardware and software components. Examples of the disclosure may include a computer-program product configured to execute methods, processes, and/or operations discussed above. The computer-program product may be, or include, one or more controllers and/or processors configured to execute instructions to perform methods, processes, and/or operations discussed above.

Having thus described several aspects of at least one embodiment, it is to be appreciated various alterations, modifications, and improvements will readily occur to those skilled in the art. Such alterations, modifications, and improvements are intended to be part of, and within the spirit and scope of, this disclosure. Accordingly, the foregoing description and drawings are by way of example only.

## Claims

1. A method of assigning addresses to devices on a network, comprising:
causing a master control unit (102) configured to be coupled to a plurality of devices including a first device to assert (202) a first address signal on a first address line (110);
causing the first device (104) to transmit (204) a first response to the master control unit via at least one data bus (118) responsive to asserting the first address signal on the first address line;
causing the master control unit to transmit (206, 402) a first network address via the at least one data bus to the first device responsive to receiving the first response;
causing the master control unit and first device to complete (208, 210, 306, 406) a first communication test responsive to transmitting the first network address; and
causing the master control unit to cease (214) asserting the first address signal responsive to completing the first communication test.

2. The method of claim 1 further comprising:
causing the first device to assert (302) a second address signal on a second address line (112);
causing a second device (106) to transmit a second response to the master control unit via the at least one data bus responsive to asserting the second address signal on the second address line;
causing the master control unit to transmit a second network address via the at least one data bus to the second device responsive to receiving the second response;
causing the master control unit and the second device to complete (306) a second communication test responsive to transmitting the second network address; and
causing the first device to cease (308) asserting the second address signal responsive to completing the second communication test.

3. The method of claim 2 where the first response from the first device includes a preexisting network address of the first device, and where the second response from the second device includes a preexisting network address of the second device.

4. The method of claim 3 wherein a preexisting network address is a default network address.

5. The method of any of claims 2 to 4, wherein:
the first communication test further includes:
causing the master control unit to transmit one or more first test signals addressed using the first network address on the at least one data bus, and
responsive to transmitting the one or more first test signals, causing the first device to transmit one or more first confirmation signals on the at least one data bus; and the second communication test further includes:
causing the master control unit to transmit one or more second test signals addressed using the second network address on the at least one data bus, and
responsive to transmitting the one or more second test signals addressed using the second network address, causing the second device to transmit one or more second confirmation signals on the at least one data bus.

6. The method of any of the above claims further comprising:
causing a preceding device (104, 106) of a plurality of sequential devices (104, 106, 108) to assert (302) a respective address signal on a respective address line, the respective address line being coupled to a next device (106, 108) of the plurality of sequential devices;
causing the next device to transmit a respective response signal via the at least one data bus responsive to the preceding device asserting the respective address signal;
causing the master control unit to transmit a respective network address via the at least one data bus to the next device responsive to the next device transmitting the respective response signal;
causing the master control unit and the next device to complete (306) a respective communication test responsive to transmitting the respective network address;
causing the preceding device to cease (308) asserting the respective address signal on the respective address line responsive to completing the communication test; and
recursively repeating the foregoing acts wherein the next device is now the preceding device until each device of the plurality of sequential devices has asserted (310) at least one corresponding respective address signal on a corresponding respective address line.

7. The method of claim 6 wherein at least one device of the plurality of sequential devices periodically asserts a respective address signal on a respective address line, wherein the respective address signal is configured to detect a presence of a new device of the plurality of sequential devices.

8. The method of any of the above claims, the method further comprising connecting a terminating resistor of a last device of the plurality of devices responsive to asserting an address signal and no response signal being transmitted responsive to asserting the address signal.

9. A system for addressing devices on a network, comprising:
a master control unit configured to be coupled to a plurality of devices including a first device;
a first address line configured to be coupled between the master control unit and the first device; and
at least one data bus configured to be coupled to the master control unit and to each device of the plurality of devices;
the master control unit being configured to operate as per any of the above method claims 1 to 8.

10. The system of claim 9 further comprising the first device, wherein the system is configured to operate as per any of the above method claims 1 to 8.

11. The system of claim 10 further comprising a second address line configured to be coupled to the first device, wherein the system is configured to operate as per any of the above method claims 1 to 8.

12. The system of claim 11 further comprising a second device of the plurality of devices, wherein the second address line is further configured to be coupled to the second device, wherein the system is configured to operate as per any of the above method claims 1 to 8.

13. The system of any of the above system claims, wherein each device of the plurality of devices, including a last device of the plurality of devices, includes a terminating resistor, and wherein the system operates according to any of the above method claims 1 to 8.

14. At least one non-transitory computer-readable medium containing thereon computer executable instructions for assigning network addresses to devices on a network, the instructions instructing at least one controller to perform a method according to any of the above method claims 1 to 8.

15. The non-transitory computer-readable medium according to claim 14, whereby the controller is a master control unit controller.
